# EUROPEAN PATENT APPLICATION

(11) **EP 1 237 104 A1**
(43) Date of publication of application: **04.09.2002**
(21) Application number: 01119955.1
(22) Date of filing: 17.08.2001
(51) Int. Cl.: G06F 17/60

(54) **Settlement device and method**

(30) Priority: 21.12.2000 JP 2000393278
(71) Applicant: Hitachi, Ltd., Chiyoda-ku, Tokyo 101-8010 (JP)
(72) Inventor: Yoshifuku, Takashi, Hitachi,Ltd., Intl.Prop.Group, Chiyoda-ku, Tokyo 100-8220 (JP); Shoda, Shigero, Hitachi,Ltd., Intl.Prop.Group, Chiyoda-ku, Tokyo 100-8220 (JP); Kawakami, Yuji, Hitachi,Ltd., Intl.Prop.Group, Chiyoda-ku, Tokyo 100-8220 (JP)
(74) Representative: Strehl Schübel-Hopf & Partner

(57) **Abstract**

A settlement method similar to a note on condition that a trade between a seller (101) and a buyer (103) can be cashed for the seller (101) with keeping merits of a settlement of the note for the buyer (103) and to enable the seller (101) to provide a sales price of goods reflecting a credit risk of the buyer (103) in the trade with the buyer (103). The settlement method is achieved by the following process; a bank device (14) owned by a bank (104) makes a response to an issue approval request of an electronic credit note from an intermediary company device (12) owned by an intermediary company (102) intermediating the trade on the basis of a preset upper limit of the trade between the seller (101) and the buyer (103) or of the trade condition. If the issue approval is active, the intermediary company device (12) transmits the electronic credit note to a seller device (11) owned by the seller (101). The seller device (11) previously manages discount conditions of electronic credit notes for each buyer (103).

## Description

### BACKGROUND OF THE INVENTION

The present invention relates to a settlement method and its device, and more particularly to a settlement method and its device which enable a seller to provide a sales price of goods reflecting a credit risk of a buyer and a bank to grasp business conditions of the seller and the buyer.

A settlement of a note is generally performed in business transactions. Regarding inventions related to the settlement of a note, there have been disclosed JP-A-2000-113089A and U.S. Patent No. 5,453,601.

In JP-A-2000-113089A, there have been disclosed a computerized note to resolve a problem of a vexatious complication of procedures conventionally required for a settlement of a note such as the stamp duty, seal, and other issuing procedures.

U.S. Patent No. 5,453,601 relates to an electronic note system among predetermined members. In these known examples, predetermined companies are previously registered as members and then a part of the members are given an authority to issue electronic notes to utilize the electronic notes for settlements in trades among members.

A settlement of a note is to defer a cash payment from a viewpoint of an efficiency of funds of a buyer, and it is thus advantageous for the buyer. On the other hand, however, from a seller's viewpoint, to collect a value of goods sold to the buyer by the seller, the seller must select either a method of holding a note issued by the buyer to receive a payment of the note or a method of cashing the note before its maturity by requesting a bank or other financial institution to discount the note. Therefore, the seller requires a considerable period for collecting the value after the sale of the goods and further takes a credit risk of the buyer until the seller receives a payment on the note at a maturity date. In other words, the seller is uncertain whether the buyer makes the payment on the note at the maturity date, and therefore if the buyer does not make the payment (dishonor of the note), the seller cannot obtain the value of the sold goods. Furthermore, if the seller requests a financial institution to discount the note, the bank examines an individual request to discount a note every time before determining whether to undertake it, and therefore the seller is uncertain whether the note can be cashed by discounting the note at the trade, and even if the request is undertaken, the seller does not know an amount deducted as a discount charge at that time and therefore the discount charge cannot be reflected on sales prices of the goods. Additionally, even after achieving the discount, in case of dishonor of the note, the bank should exercise a retroactive right that is a right on the note to repurchase the note, and thus there is such a problem that there is no difference between them in a respect that the seller takes the credit risk.

In this respect, the invention disclosed in JP-A-2000-113089A is provided to resolve the problem of the vexatious complication on the procedures related to a settlement of a note by computerizing the note as set forth in the above, but its object is not to resolve the above problem. Additionally the invention of U.S. Patent No. 5,453,601 is provided to improve the security in trades between predetermined members by using a mechanism in which only members having less possibility of falling into dishonor or other nonfulfillment of debt (the minimum credit risk) among the members issue electronic data similar to a note and thus they do not contribute to resolving the above problem in the same manner as JP-A-2000-113089A.

### SUMMARY OF THE INVENTION

It is an object of the present invention to provide a settlement method similar to a note on condition that a trade between a seller and a buyer can be cashed for the seller with keeping merits of a settlement of a note for the buyer and to enable the seller to provide a sales price of goods reflecting a credit risk of the buyer in the trade with the buyer.

In accordance with a first aspect of the present invention, there is provided a bank device having a storage section connected to a seller device and to an intermediary company device, wherein, at a registration of a seller having the seller device and a buyer corresponding to the seller, the bank device receives application information and determines whether to approve the registration on the basis of the application information, gives a seller identifier to the seller and a buyer identifier to the buyer if the registration is approved as a result of the determination, further sets an upper limit of issue of an electronic credit note issued from the intermediary company device and terms of discount of the electronic credit note for each buyer, stores the seller identifier, the buyer identifier, the upper limit of issue, and the terms of discount with being associated with each other in the storage section, and transmits the terms of discount and the seller identifier to the intermediary company device, by which the intermediary company device transfers the terms of discount and the seller identifier transmitted from the bank device to the seller device.

Preferably, the bank device receives electronic credit note issue approval request information from the intermediary company device, approves the seller identifier and a trade amount included in the electronic credit note issue approval request information, retrieves the upper limit of issue set for the buyer corresponding to the seller identifier and an unsettled balance stored for each buyer from the storage section, determines whether to approve the electronic credit note issue whose issue approval is requested on the basis of the electronic credit note issue approval request information according to the trade amount, the upper limit of issue, and the unsettled balance, and generates an approval notice and transmits it to the intermediary company device if the electronic credit note issue is approved.

Furthermore, the bank device may receive electronic debit note issue approval request information from the intermediary company device, recognizes a buyer identifier, a corresponding electronic credit note identifier, and an electronic debit note maturity date included in the electronic debit note issue approval request information, retrieves an electronic credit note par value of the corresponding electronic credit note and its electronic credit note maturity date from the storage section on the basis of the corresponding electronic credit note identifier, determines whether to approve an issue of the electronic debit note whose issue approval is requested by the electronic debit note issue approval request information on the basis of the electronic credit note par value of the corresponding electronic credit note, its electronic credit note maturity date, the electronic debit note maturity date, and the buyer identifier, and if the electronic debit note issue is approved, generates an approval notice and transmits it to the intermediary company, retrieves the corresponding electronic credit note from the storage section on the basis of the corresponding electronic credit note identifier after receiving the electronic debit note transmitted from the intermediary company, and transmits the corresponding electronic credit note to the intermediary company device.

The objects of the present invention can be achieved by the foregoing means.

### BRIEF DESCRIPTION OF THE DRAWINGS

Fig. 1 is a conceptional diagram outlining an embodiment of an electronic credit note according to the present invention;
Fig. 2 is a conceptional diagram outlining an embodiment of an electronic debit note according to the present invention;
Fig. 3 is a general configuration diagram of assistance in explaining a general configuration of a system of settlement management according to the present invention;
Fig. 4 is a flowchart of assistance in explaining a process flow performed when a bank device receives an application of a use of the system of settlement management;
Fig. 5 is a flowchart of assistance in explaining a process flow performed when the bank device determines whether to approve an issue of an electronic credit note;
Fig. 6 is a flowchart of assistance in explaining a process flow of the bank device performed when a seller cashes an electronic credit note;
Fig. 7 is a flowchart of assistance in explaining a process flow of the bank device performed when a buyer makes a request to issue an electronic debit note;
Fig. 8 is a flowchart of assistance in explaining a process flow of an intermediary company device performed upon receiving application information from a seller device;
Fig. 9 is a flowchart of assistance in explaining a process flow performed when the intermediary company device receives invoice information from the seller device;
Fig. 10 is a flowchart of assistance in explaining a process flow of the intermediary company device performed when the buyer requests an intermediary company to issue an electronic debit note;
Fig. 11 is a diagram showing a data configuration of a storage section of the bank device;
Fig. 12 is an example of a screen showing an electronic credit note drawn to the seller by the intermediary company;
Fig. 13 is an example of a screen related to payment information of the electronic credit note which the seller received from the intermediary company;
Fig. 14 is an example of a screen used when the buyer requests the intermediary company to issue an electronic debit note; and
Fig. 15 is an example of a screen of the electronic debit note issued by the intermediary company in response to the request of the buyer.

### DESCRIPTION OF THE EMBODIMENTS

Embodiments of the present invention will now be described in detail hereinafter with reference to the accompanying drawings.

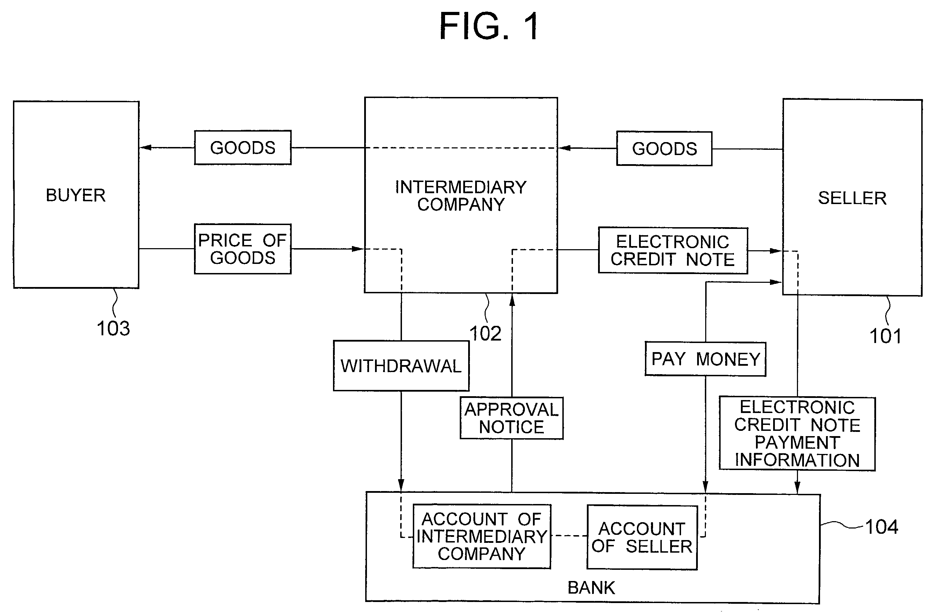

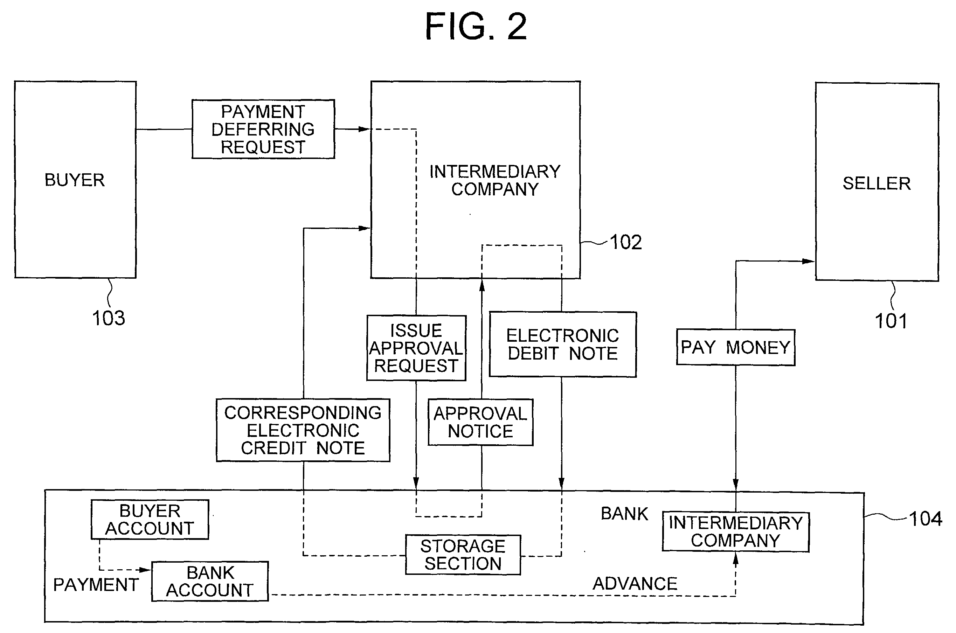

Referring to Fig. 1 and Fig. 2, there are shown conceptional diagrams of assistance in explaining an outline of an embodiment of the present invention. In Fig. 1 and Fig. 2, a system of settlement management according to the present invention comprises an intermediary company 102 set up between a seller 101 and a buyer 103 and a bank 104. Hereinafter, a business scheme realized by the present invention is outlined, first, with reference to Fig. 1 and Fig. 2.

In Fig. 1, the seller 101 is a company to do business with the buyer 103 continuously. The seller 101 sells goods to the intermediary company assuming those to be sold to the buyer 103 and receives an electronic credit note to be issued as a value of the goods from the intermediary company 102. The electronic credit note is electronic data representing a right to receive a predetermined value (hereinafter, simply referred to as par value) at a predetermined date (hereinafter, simply referred to as maturity) by means of a withdrawal from an account previously specified by the intermediary company 102. It will be described in details later.

Subsequently, the seller 101 transmits the received electronic credit note and payment information related to the electronic credit note to the bank 104. Specifically, the payment information is information indicating whether to causes the bank 104 to discount the electronic credit note or to hold it until the maturity and receive the payment. The seller 101 receives an amount of the par value minus a discount charge at a predetermined discount date if the payment information indicates that the electronic credit note is discounted or a par value at the maturity date if the payment information indicates that the electronic credit note is held until the maturity by paying money into the account of the seller 101 on the bank 104.

The intermediary company 102 sells the goods purchased from the seller 101 to the buyer 103 and the buyer 103 sets a given payment date and pays by cash as a value to the intermediary company 102 by the payment date. At this point, the intermediary company 102 is allowed to claim further payment for a given fee on top of the value. In this embodiment, the intermediary company 102 is assumed to terminate the maturity of the electronic credit note issued to the seller 101 on the payment date.

The intermediary company 102 presets the maturity date of the electronic credit note on the basis of the payment date set with the buyer 103, transmits issue approval request information to the bank 104, and if the issue is approved transmits it to the seller 101. On the other hand, as set forth in the above, the intermediary company 102 receives a value of the goods by the given payment date from the buyer 102 and then pays money into the account of the intermediary company 102 on the bank 104.

The bank 104 examines the buyer 103 before intermediating a trade between the seller 101 and the buyer 103, determines whether to approve the intermediation, determines whether to approve an intermediation of an individual trade when the intermediary company 102 issues an electronic credit note, and pays money worth the par value into the account of the seller 101 at the maturity date of the electronic credit note (if the seller holds the electronic credit note until the maturity) or pays money of an amount of the par value minus an amount worth the discount charge (if the bank 104 discounts the electronic credit note).

In the above examination made by the bank 104, the bank 104 presets the upper limit of issue for each buyer 103 associated with buying the goods sold to the intermediary company 102 by the seller 101 (the buyer 103 is referred to as a corresponding buyer and the seller 101 corresponding to the buyer is referred to as a corresponding seller to the buyer) and determines whether the electronic credit note can be issued by referring to the upper limit of issue whenever the intermediary company 102 issues an electronic credit note.

Referring to Fig. 2, there is shown a flowchart of assistance in explaining a flow of delaying the given payment date. The buyer 103 which needs a delay of the payment date requests the intermediary company 102 to issue an electronic debit note before the payment date. The electronic debit note is electronic data representing a right to receive a predetermined value (hereinafter, simply referred to as par value) at a predetermined date (hereinafter, simply referred to as maturity) by means of a withdrawal from an account previously specified by the buyer 103. It will be described in details later.

The intermediary company 102 makes an approval application to the bank 104 regarding the issue of the electronic debit note to the buyer 103, and if the issue of the electronic debit note is approved, it issues the electronic debit note and exchanges it for a corresponding electronic credit note owned by the bank 104. The corresponding electronic credit note is an electronic credit note issued to the seller when the intermediary company 102 purchases the goods sold to the buyer 103 from the buyer 101 in a trade which causes a payment duty of the buyer 103 given grace by issuing the electronic debit note (hereinafter, simply referred to as a corresponding electronic credit note).

The par value of the electronic debit note can be a value with a fee added on top of the par value of the corresponding electronic credit note, and the bank 104 pays a difference between both of the par values to the intermediary company 102.

The bank 104 holds the exchanged electronic debit note until the maturity and receives a payment by withdrawing the par value of the electronic debit note from the account previously specified by the buyer 103 at the maturity date. Furthermore at this point, money is withdrawn from the account of the buyer 103 by the amount of the par value of the electronic debit note plus an interest depending on the number of days by the payment date has been delayed.

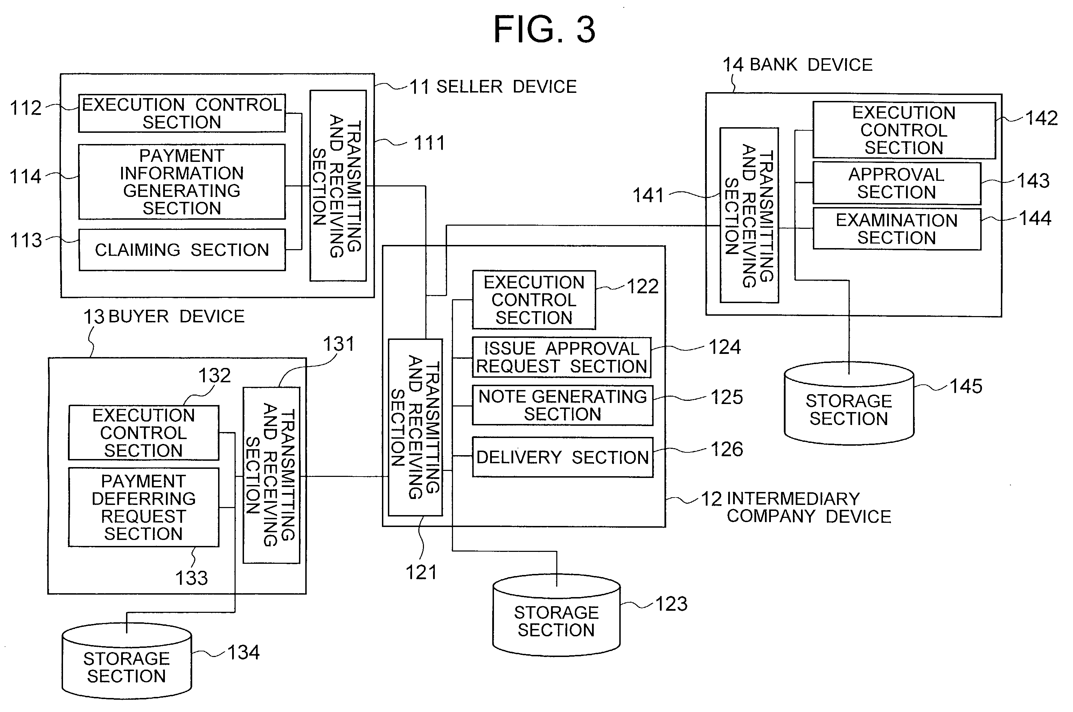

Referring to Fig. 3, there is shown a general configuration diagram of assistance in explaining a general configuration of a system of settlement management according to the present invention. The system of settlement management according to the present invention comprises a seller device 11 owned by the seller, a buyer device 13 owned by the buyer, an intermediary company device 12 owned by the intermediary company, and a bank device 14 owned by the bank. The seller device 11 has a transmitting and receiving section 111, an execution control section 112, a claiming section 113, and a payment information generating section 114. The buyer device 13 has a storing section, a transmitting and receiving section 131, an execution control section 132, and a payment deferring request section 134. The intermediary company device 12 has a transmitting and receiving section 121, an execution control section 122, a storing section 123, a issue approval request section 124, a note generating section 125, and a delivery section126 and the bank device 14 has a transmitting and receiving section 141, an execution control section 142, an approval section 143, an examination section 144, and a storage section 145.

The storage section 123 of the intermediary company device 12 stores an identifier for identifying the seller 101, an identifier for identifying the buyer 103, an electronic credit note identifier, an electronic debit note identifier, electronic credit note issue information and electronic debit note issue information, and a trade identifier given for each invoice information transmitted from the seller device 11 by the seller 101 with being associated with each other.

The issue approval request section 124 generates information for requesting the bank device 14 to approve an issue of an electronic note or an electronic debit note (electronic credit note issue approval request information or electronic debit note issue approval request information) on the basis of the invoice information transmitted from the seller device 11 or the payment deferring request information transmitted from the buyer device 13. The electronic credit note issue approval request information comprises a seller identifier of the seller 11 to which the electronic credit note is issued, a buyer identifier for identifying the corresponding buyer of the seller, a par value of the electronic credit note whose issue approval is requested by the electronic credit note issue approval request information (an electronic credit note par value) and its maturity date (an electronic credit note maturity date), and an approval request identifier which is an identifier for identifying the electronic credit note issue approval request information. The electronic debit note issue approval request information comprises a buyer identifier of the buyer 103 requesting the issue of the electronic debit note, an electronic credit note identifier of the corresponding electronic credit note of the electronic debit note (a corresponding electronic credit note identifier), a par value of the electronic debit note whose issue approval is requested by the electronic debit note issue approval request information (an electronic debit note par value) and its maturity date (an electronic debit note maturity date), and an approval request identifier of the electronic debit note issue approval request information.

The note generating section 125 generates an electronic credit note or an electronic debit note on the basis of an approval notice upon receiving the approval notice from the bank device 14 in response to the issue approval request information. The approval notice includes the approval request identifier, a par value of the note to be issued, and its maturity date. At this point, the intermediary company device 12 can determine the electronic credit note issue approval request information or the electronic debit note issue approval request information to which the approval notice has been transmitted correspondingly on the basis of the approval request identifier.

The delivery section 126 generates delivery information that the intermediary company device 12 transmits to the buyer device 13 when the intermediary company 102 sells the goods purchased from the seller 101 to the buyer 103. The delivery information comprises a trade identifier included in the invoice information transmitted from the seller device 11 to the intermediary company device 12 with a purchase of the goods by the intermediary company 102, the amount claimed to the buyer 103, and the payment date of the amount claimed.

The transmitting and receiving section 121 exchanges information with the bank device 14, the seller device 11, and the buyer device 13 and the execution control section 122 distributes processes to the respective sections and controls the execution.

The claiming section 113 of the seller device 11 generates invoice information transmitted to the intermediary company device 12 to claim the value of the goods against the intermediary company 102 with a sale of the goods to the intermediary company 102. The invoice information includes a trade identifier given to each claim and amount claimed information indicating the amount claimed against the intermediary company 102 from the seller 101.

The payment information generating section 114 generates information indicating whether the seller 11 requires a discount regarding an electronic credit note that the seller 11 has received from the intermediary company 12, which is payment information transmitted to the bank device 104 with the electronic credit note. The payment information includes en electronic credit note identifier of the electronic credit note associated with the payment information, the seller identifier, a flag indicating whether the electronic credit note is held until the maturity date or is discounted, and discount date information indicating a discount date for the electronic credit note to be discounted.

The transmitting and receiving section 111 exchanges information with the bank device 14, the intermediary company device 12, and the buyer device 13 and the execution control section 112 distributes processes to the respective sections and controls the execution.

The payment deferring request section 133 of the buyer device 13 generates payment deferring request information transmitted to the intermediary company device 12 if the buyer 103 having the buyer device 13 requires a deferment of the payment to the intermediary company 102. The payment deferring request information comprises a buyer identifier of the buyer 103 which is a generation source and a trade identifier corresponding to the trade which is a cause of the payment which is required to be deferred by the payment deferring request information.

The storage section 134 stores the amount claimed included in the delivery information transmitted from the intermediary company device 12, the payment date, and the trade identifier with being associated with each other.

The transmitting and receiving section 131 exchanges information with the bank device 14, the intermediary company device 12, and the seller device 11 and the execution control section 132 distributes processes to the respective sections and controls the execution.

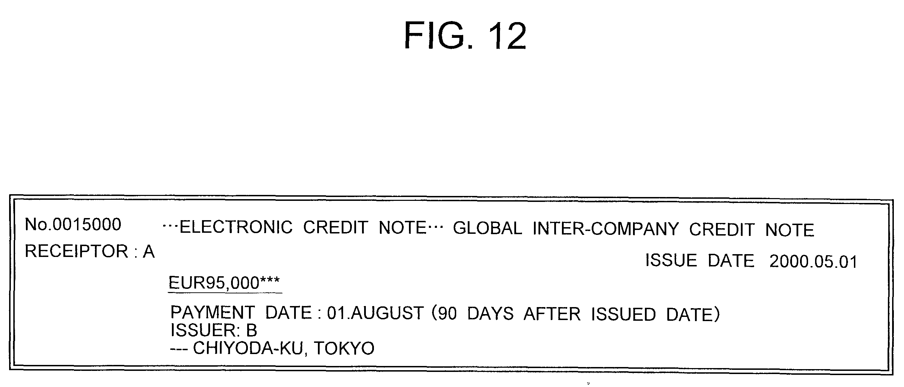

The storage section of the bank device 14 comprises a note storage section and a note information storage section; the note storage section stores an electronic credit note transmitted from the seller device 11 and an electronic debit note transmitted from the intermediary company device 12 and the note information storage section stores a seller table, a buyer table, an upper limit of issue table, an electronic credit note table, and an electronic debit note table. The details will be described later by referring to Fig. 12.

The examination section 144 examines the buyer 103 upon receiving application information of using the system of settlement management of the present invention, gives a seller identifier and a buyer identifier to the seller 101 and the buyer 103 if the intermediary company 102 is approved to intermediate a trade between the seller 101 and the buyer 103, sets the upper limit of issue of the electronic credit note issued by the intermediary company 102 in the trade between them, and stores the seller identifier, the buyer identifier, and the upper limit of issue with being associated with each other. The application information includes a name, an address, and other attribute information of the seller 101 and a name, an address, and other attribute information of the buyer 103. While the seller 101 is assumed to make the application in this embodiment, the application can be made by the buyer 103. Naturally, the seller 101 may refuse a use of the buyer 103.

The approval section 143 receives the electronic credit note issue approval request information and determines whether to issue the electronic credit note on the basis of the trade amount included in the electronic credit note issue approval request information and the upper limit of issue stored in the storage section 145. If the issue is approved, it generates an approval notice.

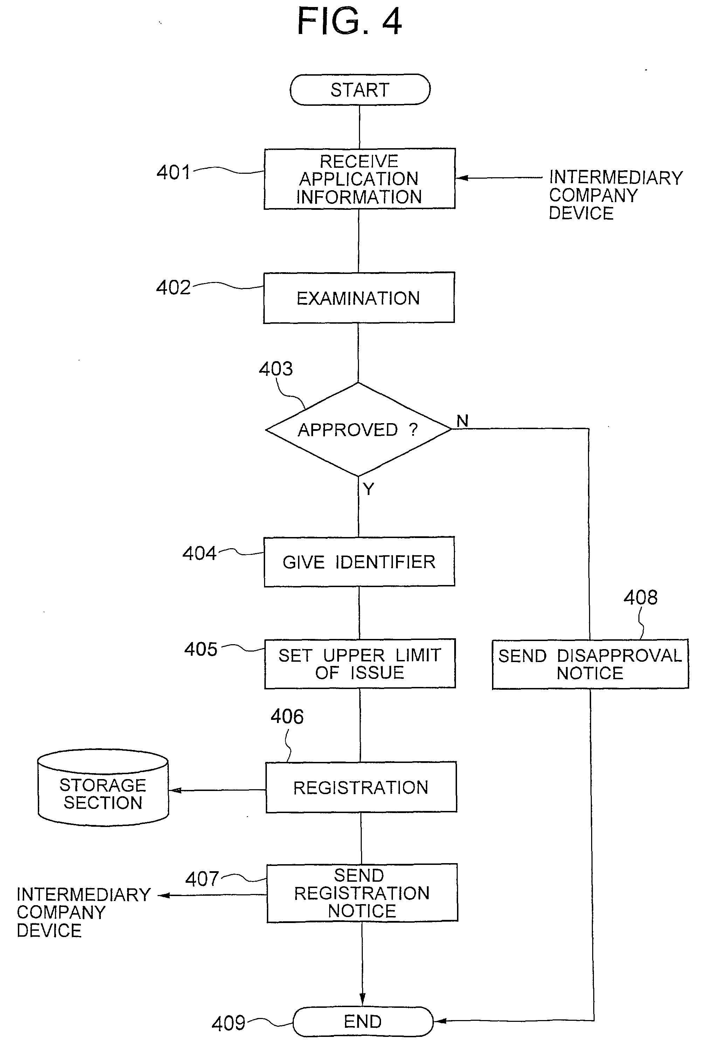

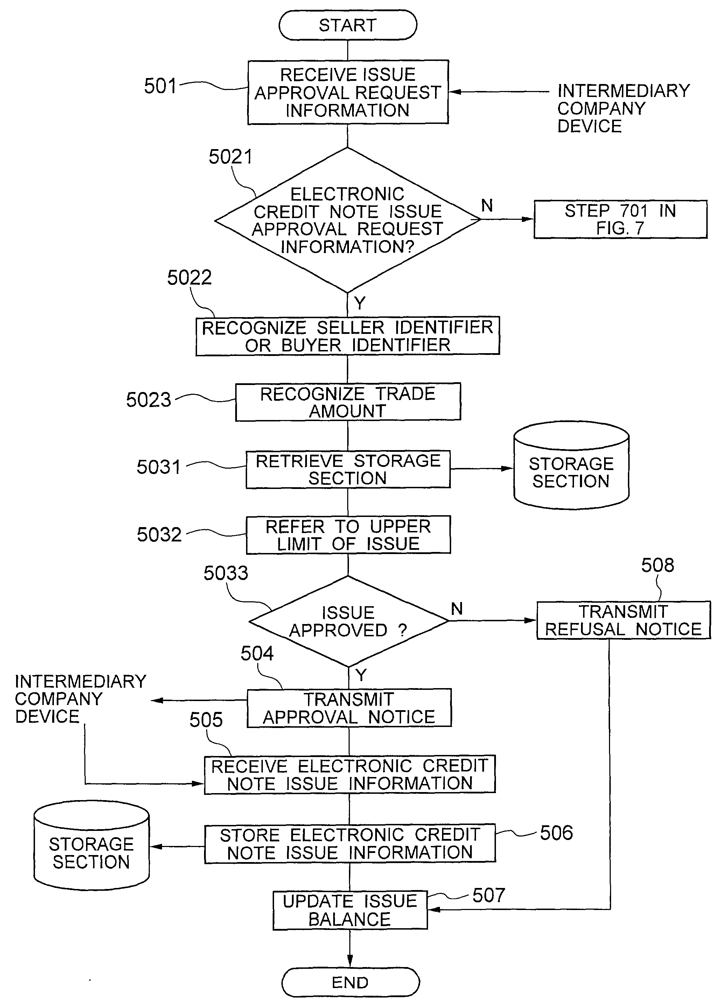

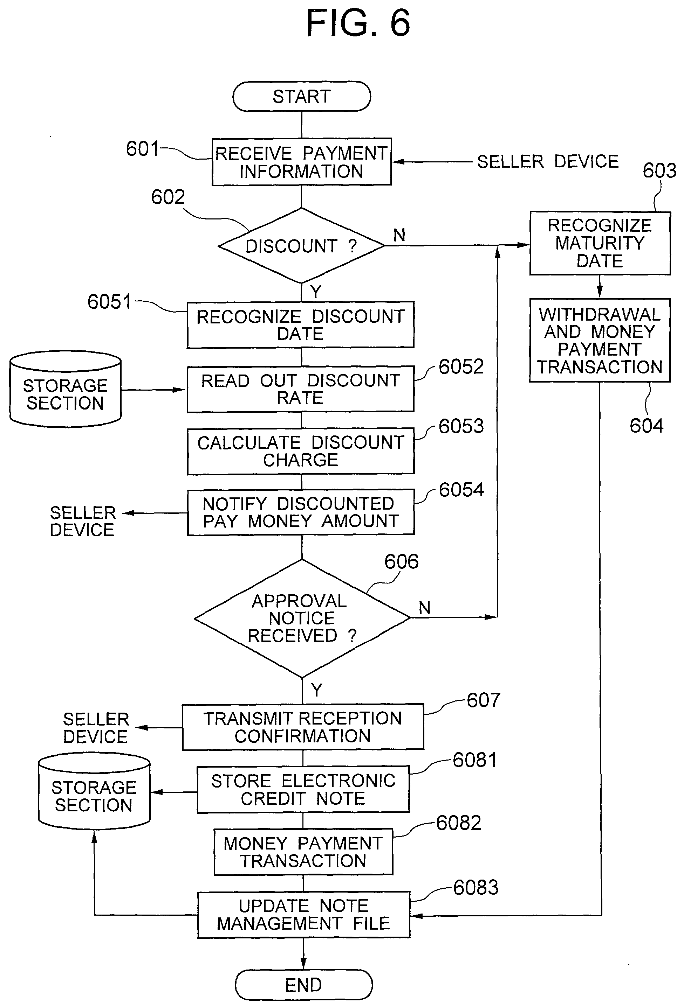

Referring to Fig. 4, there is shown a flowchart of assistance in explaining a process flow performed when the bank device 14 registers the seller 101 and the buyer 103 to whom the seller 101 sells the goods as users in response to the application of the use of the system of settlement management of the present invention. It should be noted that the application can be made by the buyer 103, as set forth in the above.

The bank device 14 receives the application information from the intermediary company device 12 of the buyer 101 (step 401). This application information is received by the intermediary company device 12 of the intermediary company 102 from the buyer device 11 of the buyer 101 and the intermediary company device 12 transfers it to the bank device 14. The application information comprises a name, an address, and other seller's attribute information of the seller 101, a name of the goods sold by the seller, information of lines of business such as a unit price, and a name, an address, and other buyer's attribute information of the buyer 103 to whom the goods are sold.

The bank device 14 examines the seller 101 and the buyer 103 on the basis of the application information, determines whether to approve of the intermediary company intermediating the trade exchanged between the seller 101 and the buyer 103 (steps 402 and 403), and transmits a disapproval notice to the intermediary company device 12 in case of not approving to terminate the process (steps 408 and 409). The examination in the step 402 is conventionally performed as a loan or other financing of the bank 104 and therefore the details are omitted here.

In steps 402 and 403, if the intermediary company 102 is approved for intermediating the trade between the seller 101 and the buyer 103, the bank device 14 generates and gives a seller identifier and a buyer identifier for and to the seller 101 and the buyer 103, respectively (step 404), presets an upper limit of issue of the electronic credit note issued by the intermediary company 103 in the intermediary company's 103 intermediation of the trade between the seller 101 and the buyer 103 (step 405), stores the seller identifier, the buyer identifier, and the upper limit of issue with being associated with each other in the storage section 145 (step 406), and transmits a registration notice to the intermediary company device 12 to terminate the process (step 407). The registration notice describes that the seller identifier, the buyer identifier, and the application are approved.

In this embodiment, it is assumed that in the step 405 further setting is made on terms of discount (a discount rate, etc. set according to the result of the examination of the buyer 103) used for calculating a discount charge when the seller 101 requests the bank 104 to discount the electronic credit note received from the intermediary company 102 and then they are stored.

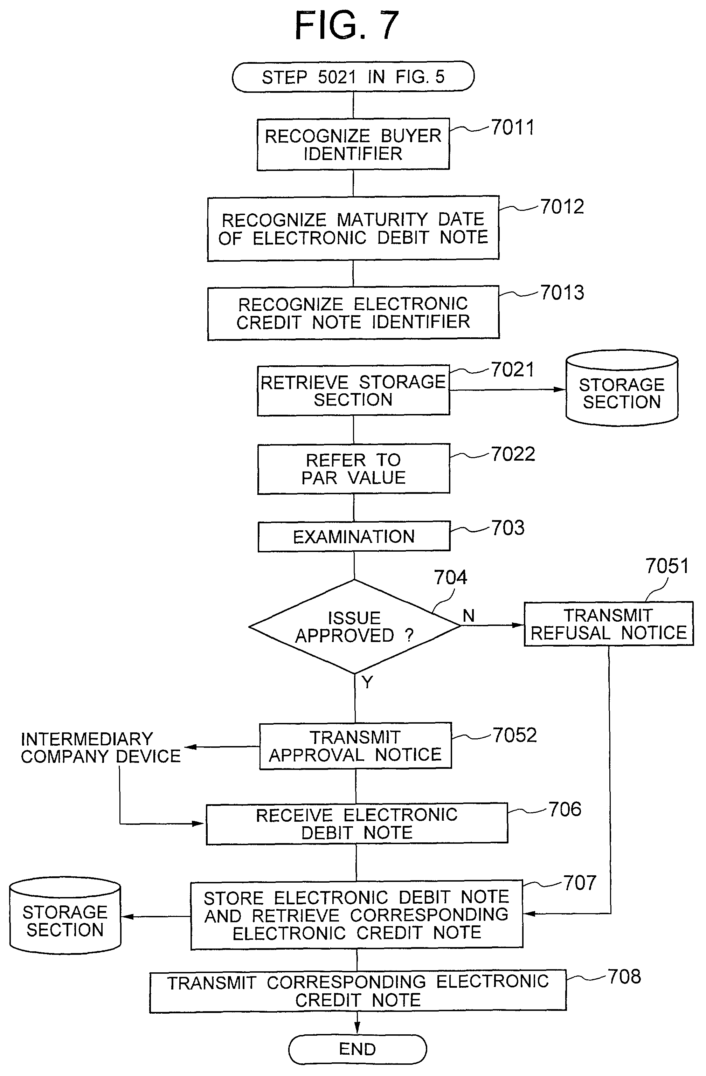

Referring to Fig. 5, there is shown a flowchart of assistance in explaining a process flow performed when the bank device 14 receives a request of issuing an electronic credit note from the intermediary company device 12 and issues the electronic credit note. First, the bank device 14 receives a note issue approval request information from the intermediary company device 12 (step 501).

Next, the bank device 14 recognizes that an object requested to be issued is an electronic credit note (step 5021). The electronic credit note issue approval request information includes a seller identifier of a seller who is a receiptor of the electronic credit note whose issue approval is requested by the electronic credit note issue approval request information, a buyer identifier of a corresponding buyer of the seller, a trade amount which is a purchase amount for which the intermediary company 102 purchased the goods from the seller 101, and an electronic credit note issue approval request identifier. The trade amount information is a par value of the electronic credit note and the electronic credit issue approval request identifier is an identifier given to each electronic credit note issue approval request information by the intermediary company device 12. Subsequently, the bank device recognizes the seller identifier, the buyer identifier, and the trade amount (steps 5022 and 5023). Next, it retrieves the upper limit of issue stored in the storage section 145 with a key as the buyer identifier, refers to it, and determines whether to approve the issue of the electronic credit note on the basis of the upper limit of issue and the trade amount (steps 5031, 5032, and 5033). If the issue of the electronic credit note is rejected in the step 5033, the intermediary company device 12 transmits a refusal notice and terminates the process (step 508). The refusal notice includes the approval request identifier indicating to which issue request information the rejection has been made.

If the issue of the electronic credit note is approved in the step 5033, the bank device 14 transmits an approval notice to the intermediary company device 12 (step 504). The approval notice includes an approval request identifier included in the electronic credit note issue approval request information indicating electronic credit issue approval request information associated with the approval notice transmitted in the step 504.

After the step 504, the bank device 14 receives the electronic credit note issue information generated when the intermediary company device 12 issue the electronic credit note (step 505). The electronic credit note issue information comprises an electronic credit note identifier of the electronic credit note issued by the intermediary company, an approval request identifier corresponding to the electronic credit note, a seller identifier of the seller 101 to be a receiptor of the electronic credit note, a buyer identifier of the buyer 103 buying the goods sold to the intermediary company 102 by the seller 101, a par value, and a maturity.

The bank device 14 stores the electronic credit note issue information into the storage section 145 and updates the upper limit of issue table of the storage section 145 on the basis of the buyer identifier and the par value included in the electronic credit note issue information before terminating the process (steps 506 and 507).

Referring to Fig. 6, there is shown a flowchart of assistance in explaining a process flow of the bank device 14 performed when the seller 101 cashes the electronic credit note. The bank device 14 receives the electronic credit note and the payment information from the seller device 11 (step 601). Though not describing in detail in this embodiment, an electronic signature or the like of the intermediary company 102 is appended to the electronic credit note and preferably the bank device 14 is enabled to certify authenticity of the electronic credit note by the electronic signature or the like. It is also true for the electronic debit note.

The payment information is generated to notify the bank 104 whether to hold the electronic credit note until the maturity date or to cause the bank 104 to discount it regarding the electronic credit note which the seller 101 has received from the intermediary company 102 and comprises a corresponding electronic credit note identifier, a seller identifier, a flag indicating whether it should be held until the maturity date or discounted, and discount date information indicating a discount date if it should be discounted.

The bank device 14 stores the electronic credit note into a note custody section, recognizes whether the seller 101 requires the discount on the basis of the payment information (step 602), recognizes the maturity date of the electronic credit note if the seller 101 holds the electronic credit note until the maturity date (step 603), decreases an account of the intermediary company 102 by an amount equivalent to the par value at the maturity date, and increases an account of the seller 101 (step 604) before terminating the process. The process in the step 604 is a general settlement transaction in bank business activities and therefore it is not described in detail here.

If it is recognized that the seller 101 requires to discount the credit note in the step 602, the bank device 104 refers to a discount date shown in the payment information (step 6051), retrieves and reads out the discount rate stored in the storage section 145 for each buyer on the basis of the electronic credit note identifier (step 6052), calculates a pay money amount after the discount to the seller 101 after calculating the discount charge on the basis of the discount date, the discount rate, and the par value of the electronic credit note (step 6053), and transmits the discounted pay money amount to the seller device 11 (step 6054).

If an approval notice transmitted from the seller device 11 for the discounted pay money amount is received (step 606), the bank device 14 transmits an acknowledgement to the seller device 11 (step 607), pays money into the account of the seller 101 on the basis of the discounted pay money amount (step 6081), stores the electronic credit note into the storage section 145 (step 6082), and updates the note management file (step 6083) before terminating the process.

Unless the discounted pay money amount is approved in the step 606, the control progresses to the step 603.

Referring to Fig. 7, there is shown a flowchart of assistance in explaining a process flow of the bank device 14 performed when the buyer 103 requests an issue of an electronic debit note. This flowchart shows a process flow performed when the bank device 14 receives electronic debit note issue approval request information in the step 5021 in Fig. 5. The electronic debit note issue approval request information comprises a buyer identifier of the buyer 103 whose payment is deferred by an electronic debit note whose issue approval is requested by the electronic debit note issue approval request information, an identifier of a corresponding electronic credit note (hereinafter, simply referred to as a corresponding electronic credit note identifier), and an electronic debit note maturity. The electronic debit note maturity is a payment date set anew by the issue of the electronic debit note, and therefore the payment of the buyer 103 is deferred for a period from the maturity date of the corresponding electronic credit note (in this embodiment, the maturity date of the electronic credit note is the same as the payment date when the buyer 103 pays to the intermediary company 102 as described above) to the maturity date of the electronic debit note.

First, the bank device 14 recognizes the buyer identifier, the electronic debit note maturity date, and the corresponding electronic credit note identifier (steps 7011, 7012, and 7013).

Next, the bank device 14 searches the storage section 145 with the corresponding electronic credit note identifier as a key and refers to a par value of the electronic credit note corresponding to the corresponding electronic credit note identifier (steps 7021 and 7022). The par value is to be a loan value from the bank 104 to the buyer 103 in an issue of the electronic debit note.

The bank device 14 examines the buyer 103 on the basis of the buyer identifier, the par value, and the electronic debit note maturity date and determines whether to approve the issue of the electronic debit note (step 703). The examination is performed on an assumption that the par value is a loan value, a period up to the electronic debit note maturity date is a loan period, and the buyer 103 is a borrower, and it is the same as conventional one in the loan transactions in general performed by banks, by which its details are omitted here.

Unless the issue of the electronic debit note is approved in the examination in the step 703 (step 704), the bank device 14 transmits a refusal notice to the intermediary company device 12 (step 7051) and terminates the process. If the issue of the electronic debit note is approved in the step 704, the bank device 14 generates an approval notice and transmits the approval notice to the intermediary company device 12 (step 7052). The approval notice indicates an approval of issuing the electronic debit note requested to be issued by the electronic debit note issue approval request information and includes the maturity date and the par value of the electronic debit note to be issued. In addition, the par value included in the approval notice is a par value of the corresponding electronic credit note plus an interest fee for the deferred period (a period from the maturity date of the electronic credit note to that of the electronic debit note).

After transmitting the approval notice, the bank device 12 receives the electronic debit note transmitted from the intermediary company device 12 (step 706). At this point, the electronic debit note includes the corresponding electronic credit note identifier and the bank device 14 stores the electronic debit note into the storage section (step 707), retrieves the electronic credit note on the basis of the corresponding electronic credit note identifier, and transmits and returns the electronic credit note to the intermediary company device 12 (step 708).

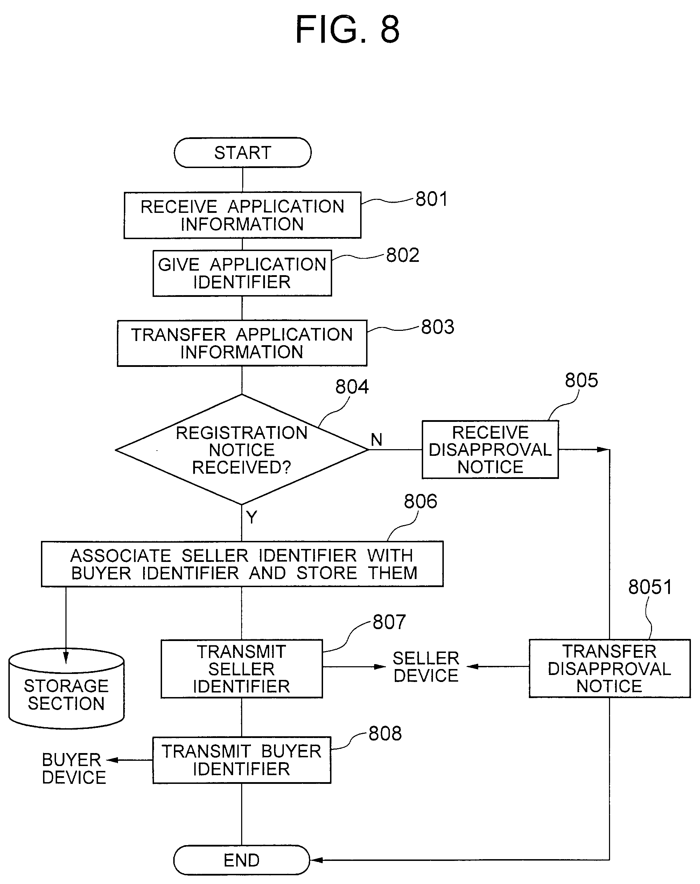

Referring to Fig. 8, there is shown a flowchart of assistance in explaining a process flow of the intermediary company device 12 performed upon receiving the application information from the seller device 11. While the application information is described with being assumed to be transmitted to the intermediary company device 12 via a network from the seller device 11 in this embodiment, the application information can also be inputted from an input terminal connected to the intermediary company device 12. The application information includes a name, an address, and other attribute information of the seller 101 and the buyer 103.

Upon receiving the application information (step 801), the intermediary company device 12 gives and appends an identifier to each application information (step 802), transfers it to the bank device 14 (step 803), and receives a registration notice which is a notice of a result of the examination that the bank 104 performs on the basis of the application information (step 804) or a disapproval notice (step 805). It should be noted that each of the registration notice and the disapproval notice includes an application identifier appended to the application information in the step 802, indicating to which application information the registration notice or the disapproval notice has been made. When receiving the disapproval notice, the intermediary company device 12 transfers it to the seller device 11 which has transmitted the application information (step 8051) and terminates the process.

When receiving the registration notice, the intermediary company device 12 generates a seller identifier and a buyer identifier for the seller 101 and the buyer 103, stores the seller identifier and the buyer identifier into the storage section 145 with being associated with each other (step 806), transmits the seller identifier to the seller device 11 (step 807) and the buyer identifier to the buyer device 11 (step 808), and terminates the process.

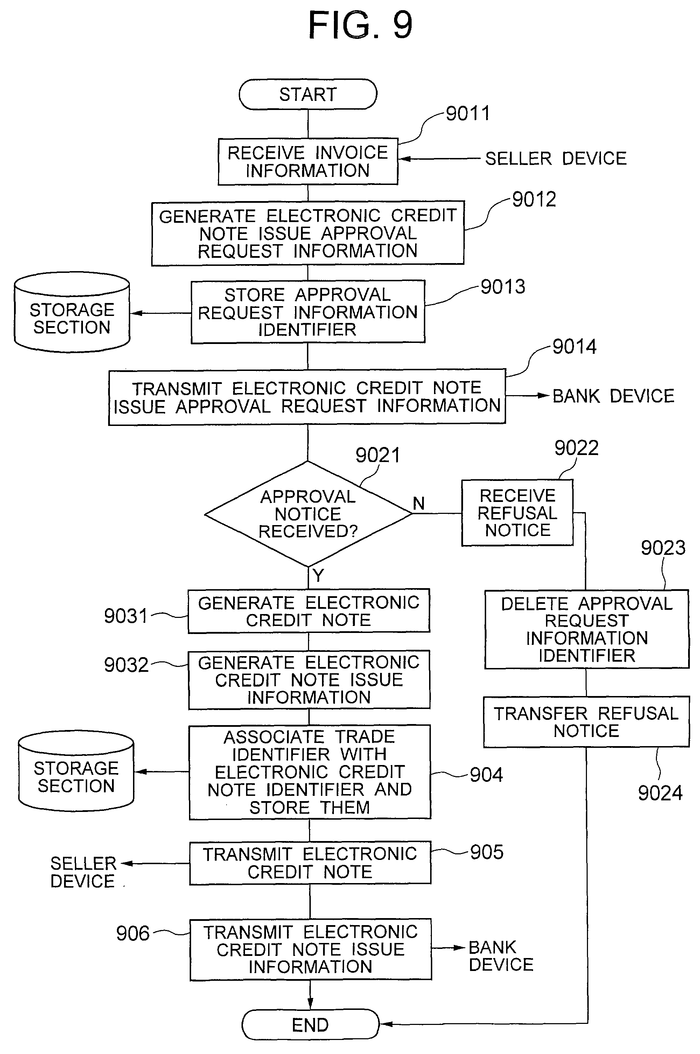

Referring to Fig. 9, there is shown a flowchart of assistance in explaining a process flow performed when the intermediary company device 12 receives invoice information from the seller device 11. The intermediary company device 12 receives the invoice information from the seller device 11 (step 9011) and generates electronic credit note issue approval request information on the basis of the invoice information (step 9012). The invoice information indicates an amount to be claimed as a price of the goods to the intermediary company 102 when the seller 101 sells the goods to the intermediary company 102, including a seller identifier of the seller 101 and a trade identifier given to each invoice information in addition to the amount claimed.

Subsequently, the intermediary company device 12 stores the approval request identifier of the electronic credit note issue approval request information into the storage section (step 9013) and transmits the electronic credit note issue approval request information to the bank device 14 (step 9014).

As set forth in the above, the bank device 14 transmits an approval notice or a refusal notice in response to the electronic credit note issue approval request information. When receiving the refusal notice (step 9022), the intermediary company device 12 deletes the approval request identifier stored in the step 9013 (step 9023), transfers the refusal notice to the seller device 11 (step 9024), and terminates the process. Each of the refusal notice and the approval notice includes the approval request identifier, indicating which electronic credit note issue approval request information the refusal notice or the approval notice corresponds to.

On the other hand, when receiving the approval notice (step 9021), the intermediary company device generates an electronic credit note on the basis of the approval notice (step 9031) and generates electronic credit note issue information (step 9032). Next, the intermediary company device 12 associates the trade identifier with an electronic credit note identifier of the electronic credit note and stores them to the storage section 145 (step 904), transmits the electronic credit note to the seller device 11 (step 905), transmits the electronic credit note issue information to the bank device 14 (step 906), and terminates the process.

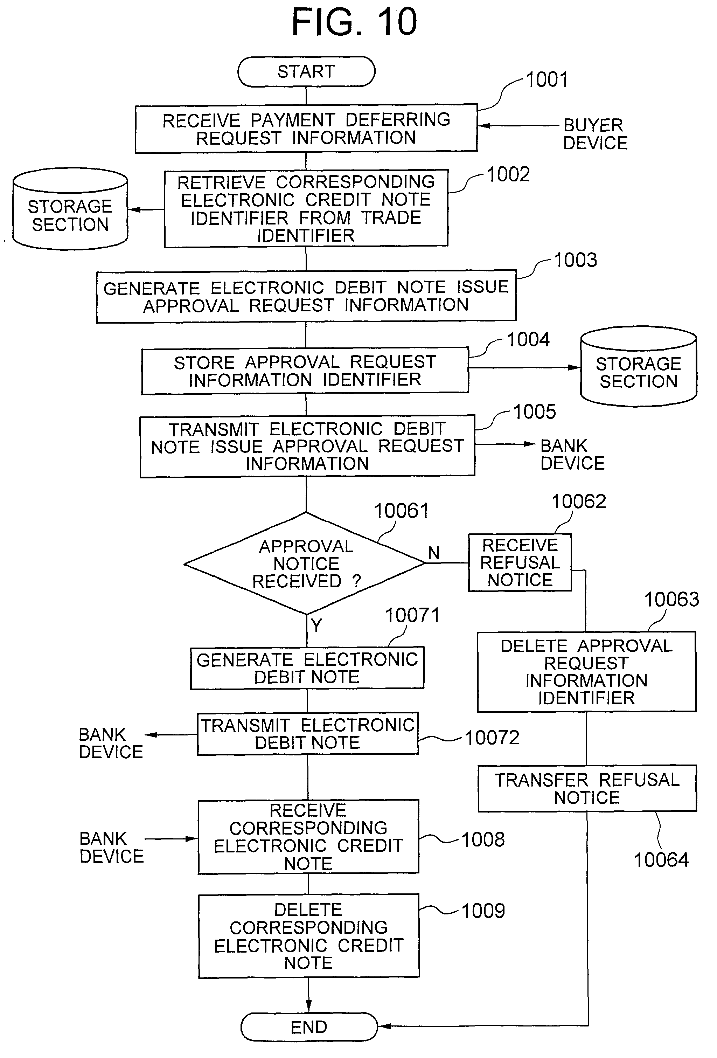

Referring to Fig. 10, there is shown a flowchart of assistance in explaining a process flow of the intermediary company device performed when the buyer 103 requests the intermediary company 102 to issue an electronic debit note.

First, the intermediary company device 12 receives payment deferring request information generated by the buyer 103 for a request of issuing the electronic debit note (step 1001), retrieves the electronic credit note identifier of the corresponding electronic credit note from the storage section on the basis of the trade identifier included in the payment deferring request information (step 1002), generates electronic debit note issue approval request information (step 1003), stores the approval request identifier of the electronic debit note issue approval request information into the storage section (step 1004), and transmits the electronic debit note issue approval request information to the bank device 14 (step 1005).

The bank device 14 transmits an approval notice (step 10061) or a refusal notice (step 10062) in response to the electronic debit note issue approval request information. When receiving the refusal notice, the intermediary company device 12 deletes the approval request identifier stored in the step 1004 (step 10063), transmits the refusal notice to the buyer device 13 (step 10064), and terminates the process. Also in this process, each of the refusal notice and the approval notice includes the approval request identifier, indicating which electronic debit note issue approval request information each refusal notice or approval notice corresponds to.

On the other hand, when receiving the approval notice, the intermediary company device 12 generates an electronic debit note on the basis of the approval notice (step 10071) and transmits it to the bank device 14 (step 10072).

Upon receiving the electronic debit note transmitted in the step 10072 as set forth in the above, the bank device 14 transmits the corresponding electronic credit note to the intermediary company device 12. The intermediary company device 12 receives the corresponding electronic credit note (step 1008), deletes it (step 1009), and terminates the process. The deleting process in the step 1009 can be performed in any form only if the electronic credit note is invalidated.

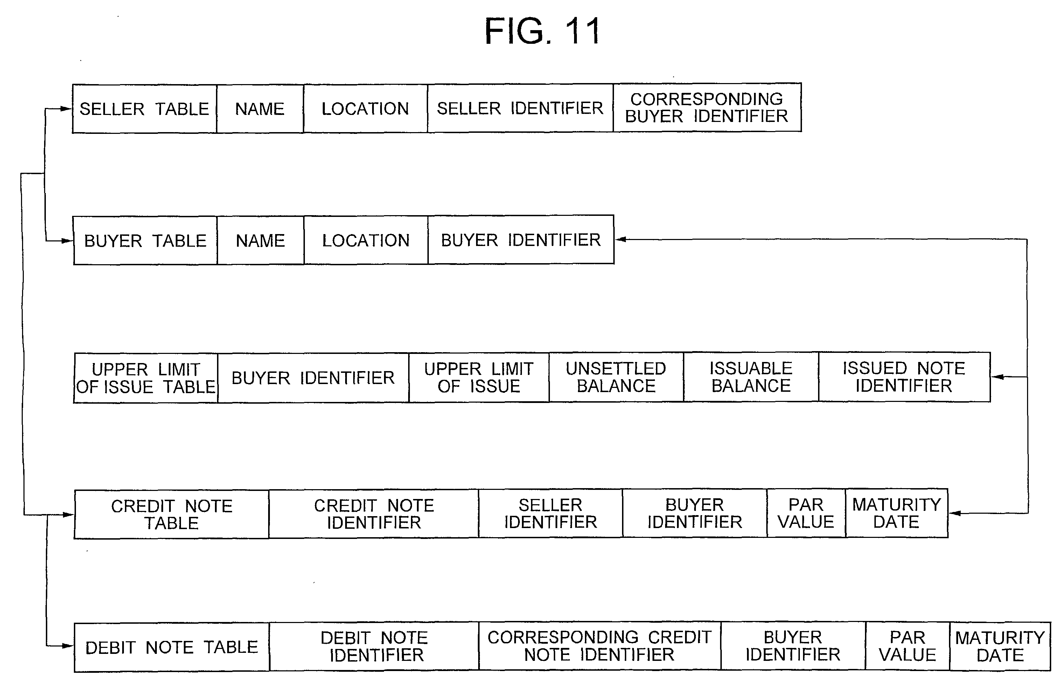

Referring to Fig. 11, there is shown a diagram of a data configuration of the storage section 145 of the bank device. The storage section 145 comprises a seller table, a buyer table, an upper limit of issue table, a credit note table, and a debit note table, with the respective tables associated with each other.

The seller table is used to store a name and a location of the seller 101, a seller identifier, and a corresponding buyer identifier that is an identifier of a corresponding buyer 103. The buyer table is used to store a name and an address of the buyer and a buyer identifier. The upper limit of issue table is used to store a buyer identifier, an upper limit of issue set for the buyer 103 corresponding to the buyer identifier, a balance of an already issued unsettled note, an identifier of the issued note, and an issuable note balance of the notes which the intermediary company 102 can issue to the corresponding seller 101 of the buyer 103. The credit note table is used to store a credit note identifier of a issued electronic credit note, a seller identifier of the seller 101 to be a receiptor of the electronic credit note, a buyer identifier of a corresponding buyer 103 of the seller, a par value of the electronic credit note, and a maturity date of the electronic credit note. The debit note table is used to store an electronic debit note identifier of an issued electronic debit note, an electronic credit note identifier of a corresponding electronic credit note of the debit note, a buyer identifier of the buyer 103 to be a payer of the electronic debit note, a par value of the electronic debit note, and a maturity date.

Referring to Fig. 12, there is shown an example of a screen showing an electronic credit note which an intermediary company B has drawn to a seller A. The intermediary company B enters a receipt (seller A), an amount payment (95,000), currency (EUR), an issue date (01. May. 2000), a payment date (01. August. 2000), an issuer (intermediary company B), and an address of an issuer. In this connection, this screen in this specification displays a symbol "X Bank Y Branch" indicating an authentication of a Y branch of the X bank and a symbol "Forex" indicating a contract to enable foreign currency to be exchanged for specified currency.

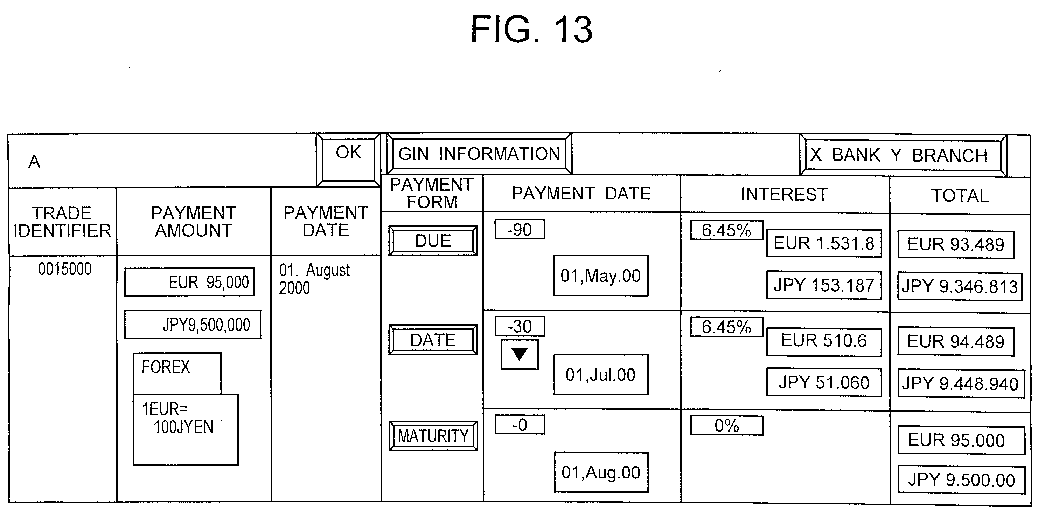

Referring to Fig. 13, there is shown an example of a screen related to payment information of the electronic credit note which the seller A has received from the intermediary company B. The seller A submits a payment request to the Y branch of the B bank by using this screen. On this screen, by selecting Due in the Request 1310, an amount of 9,346,813 yen can be received for the par value of EUR 95,000 on May 1, 2000. An interest charge is provided by a system of the X bank and a currency exchange from EUR to JPY is performed on the basis of Forex and the application information is on the basis of a contract. Selecting date 1311 of the request enables an arbitrary maturity date before the maturity date to be specified. An interest is calculated with a payment date specified by the payment date input field 1321 (30 days before the maturity) and it is possible to receive 9,448,940 yen. Selecting Maturity 1312 in the request determines a payment on the maturity date and it is possible to receive 9,500,000 yen at the maturity date. This screen displays a case in which the seller A makes a contract of currency exchange rate (1 EUR = 100 JPY) with the X bank.

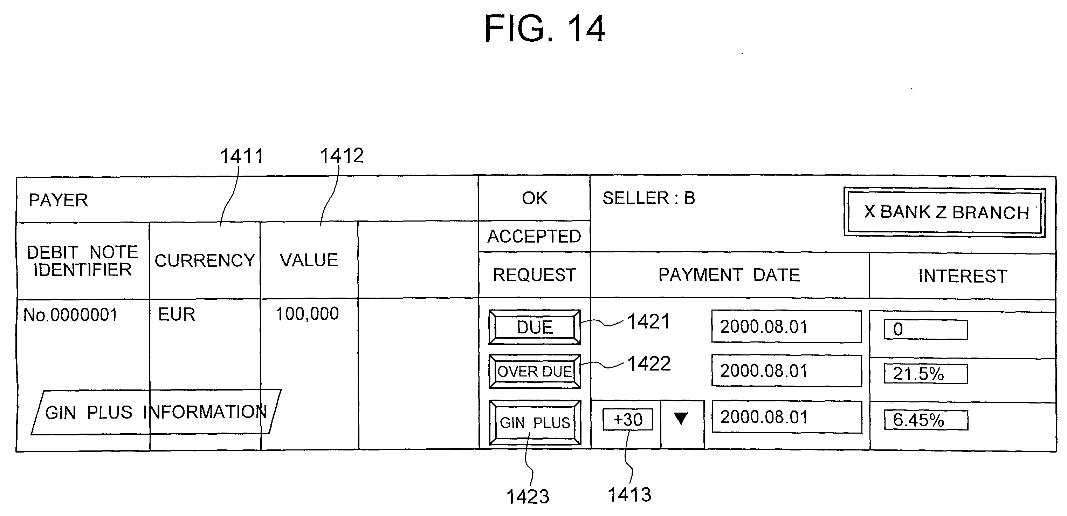

Referring to Fig. 14, there is shown an example of a screen for requesting an issue of an electronic debit note from a buyer C to the intermediary company B.

If the buyer C inputs a trade identifier corresponding to a payment required to be deferred, the screen displays a payment date of the buyer C in a trade corresponding to the trade identifier. The buyer C specifies currency 1411, an amount 1412, and a period 1413 by which the payment is to be deferred, complying with the information on the screen. To defer the payment, use a Gin Plus key 1423 for extending the period or an Over due key 1422 for automatically deferring the payment date. In using the Gin Plus key 1423, an extended period required by the buyer C is preset. In using the Over due 1422 key, a payment date is set as undefined and then a period exceeding the payment date is calculated to put an interest. The Over due key 1422 has the same function as overdraft and therefore its interest is higher than for the Gin Plus key 1423.

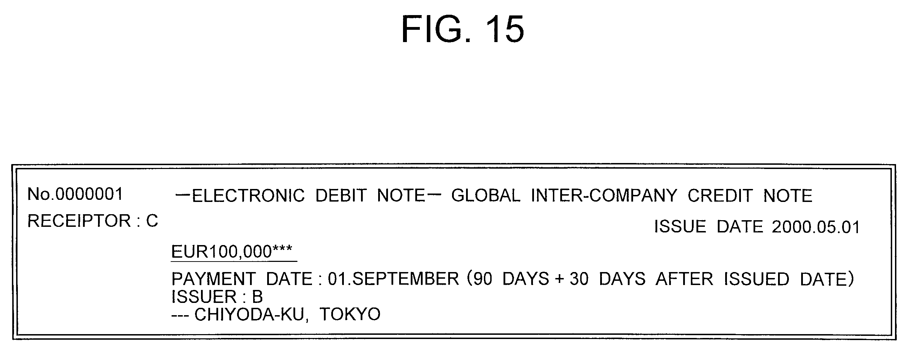

Referring to Fig. 15, there is shown an example of a screen of an electronic debit note which the intermediary company B issued in response to the request of the buyer C. Upon an input of the necessary items on the request screen described by using Fig. 14, this screen is generated with referring to contents of the input. This screen displays a symbol "X Bank Z Branch" indicating an approval of the Z branch of the X bank. An issuer is the intermediary company B and a payer is the buyer C. The amount and the payment date are displayed as EUR 100,000 and 01.September. (90 days + 30 days after issued date), respectively, indicating that the payment is deferred by 30 days. For the issue date, an issue date of the electronic credit note 01.May.2000 is displayed.

As set forth hereinabove, the present invention enables a seller to conduct a trade without any credit risk of a buyer, to previously recognize a given discount rate in the trade, and to cause the discount rate to be reflected on a sales price of goods and enables a bank to grasp business conditions of the seller and the buyer by intervening in a form of an approval transaction related to issuing a note at each trade between the seller and an intermediary company or between an intermediary company and the buyer.

## Claims

1. A settlement method using an electronic credit note in a settlement system, comprising a seller device (11), a buyer device (13) owned by a buyer (103) to trade with a seller (101) having said seller device (11), an intermediary company device (12) owned by an intermediary company (102) to mediate a trade of goods between said seller (101) and said buyer (103), and a bank device (14) having a storage section (145),
wherein said bank device (14) stores upper limit information indicating an upper limit of an amount of the goods sold to said buyer (103) by said intermediary company (102) to be paid to the seller (101) into said storage section (145), receives approval request information for requesting an electronic credit note issue approval including amount information which indicates a price of the goods sold to said intermediary company (102) by said seller (101) from said intermediary company device (12), and transmits approval information to said intermediary company device (12) if said upper limit information is lower than said amount information, and
wherein said intermediary company device (12) receives said approval information, generates an electronic credit note which is data representing a contract to pay the amount indicated in said amount information at a predetermined date on the basis of said received approval information, transmits said electronic credit note to said seller device (11), and sends said generated result as said electronic credit note issue information to said bank device (14).

2. A method according to claim 1, said bank device (14) stores discount rate information of said amount payment associating it with said upper limit information and transmits said discount rate information to said seller device (11) via said intermediary company device (12).

3. A method according to claim 1, said bank device (14) transmits a refusal notice to said intermediary company device (12) regarding the issue of said electronic credit note if said account information is greater than said upper limit information and wherein said intermediary company device (12) receives said refusal notice and notifies said seller (101) that said electronic credit note is not issued.

4. A method according to claim 1, wherein said electronic credit note issue information includes said account information and wherein said bank device (14) stores said account information as unsettled balance information in said storage section (145) with associating it with said upper limit information corresponding to said buyer (103).

5. A method according to claim 1, wherein said approval request information is generated on the basis of invoice information for claiming a value of the goods sold to said intermediary company (102) by said seller (101).

6. A method according to claim 1, wherein said bank device (14) associates a seller identifier given to said each seller (101), a buyer identifier given to said each buyer (103), said upper limit information, and said discount rate information with each other and stores them.

7. A settlement method using an electronic credit note in an intermediary company device (12) owned by an intermediary company (102) and connected to a seller device (11), a buyer device (13) owned by a buyer (103) to trade with a seller (101) having said seller device (11) and a bank device (14) having a storage section (145) for mediating a trade of goods between said seller (101) and said buyer (103),
wherein said intermediary company device (12) transmits approval request information for requesting an electronic credit note issue approval including account information indicating a value of the goods sold to said intermediary company (102) by said seller (101), and
wherein said intermediary company (102) receives approval information for permitting said electronic credit note issue approval request generated on the basis of upper limit information and said account information from said bank device (14) having said storage section (145) previously storing said upper limit information indicating an upper limit of an amount paid by said intermediary company (102) to the seller (101) of the goods sold to said buyer (103), generates the electronic credit note which is data representing a contract to pay the amount indicated in said account information at a predetermined date on the basis of said approval information, transmits said credit note to said seller device (11), and sends said generated result as said electronic credit note issue information to said bank device (14).

8. A method according to claim 7, wherein said approval information is generated if said amount indicated in said amount information is lower than the amount indicated in said upper limit information.

9. A method according to claim 7, wherein said bank device (14) stores discount rate information of said amount payment associating it with said upper limit information into said storage section (145), receives application information of using said electronic credit note from said seller device (11) or said buyer device (13), transmits said application information to said bank device (14), and transmits said discount rate information to said seller device (11) with said approval notice if an approval notice is received with said discount rate information from said bank device (14) in response to said application information.

10. A method according to claim 7, wherein, if said upper limit information exceeds said account information, the intermediary company device (12) receives a refusal notice to reject the approval of the issue of said electronic credit note and notifies said seller (11) that said electronic credit note is not issued.

11. A method according to claim 7, wherein said intermediary company device (12) receives invoice information for claiming a value of the goods sold to said intermediary company (102) by said seller (101) from said seller device (11) and said approval request information is generated on the basis of said invoice information.

12. A method according to claim 7, wherein said intermediary company device (12) receives application information of using said electronic credit note from said seller device (11) or said buyer device (13), transmits said application information to said bank device (14), and transmits said discount rate information to said seller device (11) with an approval notice if it receives the approval notice from said bank device (14) with said discount rate information in response to said application information.

13. A method according to claim 7, wherein said bank device (14) stores a seller identifier given to said each seller (101) and a buyer identifier given to said each buyer (103) into said storage section, associating them with said upper limit information.

14. A settlement method in an intermediary company device (12) owned by an intermediary company (102) for mediating a trade of goods between a seller (101) and a buyer (103) by using a buyer device (13) owned by said buyer (103), a seller device (11) owned by said seller (101), and a bank device (14),
wherein said intermediary company (102) generates an electronic credit note which is data representing a contract that said intermediary company (102) pays an amount of a value of goods sold to said intermediary company (102) by said seller (101) at a predetermined date and transmits said generated electronic credit note to said seller device (11), receives payment deferring request information for requesting a deferment of the payment to said intermediary company (102) from said buyer device (13) of said buyer (103) of the goods, transmits payment deferring approval request information for requesting an approval of deferring the payment of said buyer (103) to said bank device (14), receives an approval or a refusal of said payment deferring approval request information from said bank device (14), generates an electronic debit note including payment date information of a payment date of said buyer (103) and transmits it to said bank device (14) if an approval is responded, and deletes said data representing said electronic credit note if it receives said electronic credit note from said seller device (11) via said bank device (14).

15. A method according to claim 14, wherein said intermediary company device (12) generates electronic credit note issue information as a fact of generating said electronic credit note and transmits said generated electronic credit note issue information to said bank device (14) and wherein said bank device (14), having a storage section (145), stores an unsettled balance indicating an incompletion of said payment of the value of the goods from said intermediary company (102) to said seller (101) on the basis of said electronic credit note issue information, receives said credit note from said seller (101), and stores said credit note into said storage section (145).

16. A method according to claim 14, wherein said electronic credit note issue information includes account information indicating said value of the goods and wherein said amount to be paid at said payment date defined in said electronic debit note is greater than the amount indicated by said amount information.

17. A method according to claim 14, wherein said amount to be paid at the payment date defined in said debit note is calculated on the basis of said payment date information.
